Europäisches Patentamt

European Patent Office

Office européen des brevets

(19)

(11) Publication number:

**0 196 665**
**B1**

(12)　　　　EUROPEAN PATENT SPECIFICATION

(45) Date of publication of patent specification: **13.07.88**

(51) Int. Cl.⁴: **C 03 B 37/014**

(21) Application number: **86104490.7**

(22) Date of filing: **02.04.86**

(54) Process of and apparatus for manufacturing optical fibres for operation in the medium infrared transmission range.

(30) Priority: **03.04.85 IT 6732485**

(43) Date of publication of application:
**08.10.86 Bulletin 86/41**

(45) Publication of the grant of the patent:
**13.07.88 Bulletin 88/28**

(84) Designated Contracting States:
**CH DE FR GB LI NL SE**

(56) References cited:
**DE-A-2 530 514**
**JP-A-52 063 922**
**US-A-3 209 641**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Parisi, Giuseppe**
**Via Buscaglioni, 2**
**Torino (IT)**
Inventor: **Roba, Giacomo**
**Via dei pini domestici, 5**
**Cogoleto (Genova) (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

## Description

The present invention relates to the industrial production of physical carriers for optical telecommunication systems and more particularly it concerns a process for the fabrication of optical fibres for operation in the medium infrared transmission range.

Various materials exist which exhibit a minimum of intrinsic attenuation of the order of $10^{-2}$ to $10^{-4}$ dB/Km in the spectral region comprised between 2 and 12 µm. They are therefore considered to be suited to the fabrication of extremely low loss optical fibres to be used for transmission systems with widely spaced repeaters, operating in such a wavelength range and more particularly in the range 2 to 8 µm.

Materials used to manufacture optical fibres must have various characteristics not only of the optical type, namely high mechanical resistance, chemical and structural stability, low reactivity with the environment.

Among the various materials suitable for fibres for operation in the medium infrared transmission range, halide glasses and more particularly fluoride and chloride glasses better satisfy the above requirements.

Fluorides are suited to the spectral region of about 3 µm and chlorides to that of about 6 µm. To obtain such materials, organometallic compounds of the elements involved are preferred as base reactants, because many of these compounds are liquid or gaseous at ambient temperature and hence are suited to vapour-phase deposition.

Organo-metallic compounds which can be used have the general formula $MR_n$ or $MR_{n-m}X_m$ where M is the metal involved, with valence n, R is an alkyl group and X is a halogen, in particular F or Cl.

Some examples are $Al(CH_3)_3$ (trimethyl-aluminum) having melting point TF = 0°C and boiling point Te = 130°C; $Al(CH_3)_2Cl$ (dimethyl-aluminum chloride) having Tf = −50°C and Te = 84°C (at 26.6 KPa); $Cd(CH_3)_2$ (dimethyl-cadmium), having Tf = −4.5°C and Te = 105.5°C.

For the deposition of the mixtures of halides (fluorides or chlorides) which are to form the preform, the use of techniques similar to Organo-metallic Chemical Vapour Deposition, already used in semiconductor technology, has been suggested by EP—A1—135903 which is comprised in the state of the art according to Article 54(3) EPC and wherein halides, preferably fluorides, are obtained by thermally-activated synthesis reactions. In the process for manufacturing the optical fibres of extremely low loss in the medium infra-red, the material used for the preform fabrication is metal halide glass that is obtained from vapour phase reactants formed by the reaction occurring inside an oxide glass supporting tube between an organometallic compound of the element whose halide compound is desired, i.e. an organometallic compound of the type: $M(C_yH_\delta)_\psi A_\eta$ where M represents the metal whose halide compound is to be obtained by reactive synthesis, C is the carbon atom, H is the hydrogen atom, A is a halogen, and symbols γ, δ, ψ, η represent the molecular coefficients of atoms C, H, of group CH and of halogen A respectively, and a gaseous reactant containing the halogen, and that then is deposited on the inside wall of said supporting tube, the inside surface of said supporting tube having been enriched with the halogen by thermal diffusion.

Some disadvantages of this proposal are the presence of intermediate reaction products and even of stable compounds which can interact in destructive way in the vitreous structure to be obtained (e.g. carbon particles or metal hydrides can be formed). Besides, because of the different vapour pressures of the different glass components, an uncontrolled temperature affects the final concentration ratios of the products. Thus, in case of thermal activation, the reaction phase limits the freedom degree of the deposition of some glass components, since the deposition temperature is determined by the reaction starting temperature.

Since vitreous stability condition also depends on thermal evolution of the glass forming process, the invention aims to provide a process wherein the reaction and deposition phases can be strictly controlled in their thermal evolutions and wherein, because of the much lower temperature of the reaction phase than that of vitreous state formation, there is no damaging thermal interaction between the two phases.

The invention provides a process of manufacturing optical fibres for operation in the medium infrared transmission range, wherein a preform is drawn which is made out of metal halide glasses obtained by vapour phase reaction between an organo-metallic compound of the element whose halide is to be obtained and a gaseous reactant containing the halogen, wherein the reaction is started at ambient temperature by ultraviolet radiation, and the halides produced undergo a thermal treatment so as to meet thermophoretic deposition conditions in order that a porous body is formed and to obtain the subsequent consolidation and vitrification of the porous body in order to form the preform, and the annealing of the preform.

This process exploits the property of radical decomposition of the compounds involved in the reaction when they are exposed to UV radiation. An example is given by the following sequence:

$$X_2 \xrightarrow{\text{UV}} X\cdot + X\cdot$$

$$MR_n + X\cdot \rightarrow MR_{n-1}X + R\cdot$$

$$R\cdot + X_2 \rightarrow RX + X\cdot$$

Such chain reactions allow the continuous formation of X· groups capable of replacing alkyl groups in compound $MR_n$. In these reactions M, R, X, have the meaning already disclosed, and X·, R· denote halogen and organic radical respectively.

Radiation UV starts a chain reaction yielding the metal halide according to the following reactions:

$$MR_n + nX_2 \xrightarrow{[UV]} MX_n + nRX$$

$$MR_{n-m}X_m + (n-m)X_2 \xrightarrow{[UV]} MX_n + (n-m)RX$$

depending on the starting organo-metallic compound.

By a suitable choice of alkyl groups, compound RX is a volatile compound and can be easily separated from the solid metal halide deposited. More particularly methyl $(CH_3)$ and ethyl $(C_2H_5)$, whose chlorides and fluorides are gaseous at ambient temperature and easy to remove, are suitable alkyl groups.

Such reactions prevent formation of compounds such as those formed in case of thermal activation, since the reaction is solely oriented to the formation of the metal halide without parallel reactions, and hence the above danger of producing impurities which might interact in destructive way with the vitreous structure, is avoided.

Besides, OH-group formation, which might increase fibre attenuation, is intrinsically avoided.

The invention provides also an apparatus for manufacturing optical fibres for operation in the medium infrared transmission range, comprising means for drawing a preform obtained from a porous body composed of metal halide glasses obtained by vapour-phase reaction between an organo-metallic compound of the element whose halide is to be obtained and a gaseous reactant containing the halogen, which apparatus comprises, upstream the drawing means:

a reaction chamber at ambient temperature, into which vapour-phase reactants are introduced, and which is associated with a system for generating UV radiations and concentrating same in the reaction chamber;

a deposition and vitrification chamber associated with means for subjecting the halide produced by the reaction to the thermal treatments necessary to start and carry out the axial deposition and the consolidation and vitrification of the deposited material;

a chamber for annealing the preform resulting from vitrification, whereby the means for thermal treatment define inside said deposition and vitrification chamber two axially subsequent zones, the first being at high and constant temperature, even though lower than vitrification temperature, while in the second zone the temperature first gradually decreases to meet thermophoretic deposition conditions, hence it increases again up to the values corresponding to the melting point of the glass concerned and finally presents a sharp decrease down to values which can be lower than 0°C.

The invention will become more apparent with reference to the annexed drawings, in which:

Fig. 1 is a schematic representation of the process according to the invention;

Fig. 2 is a sectional view of the apparatus according to the invention.

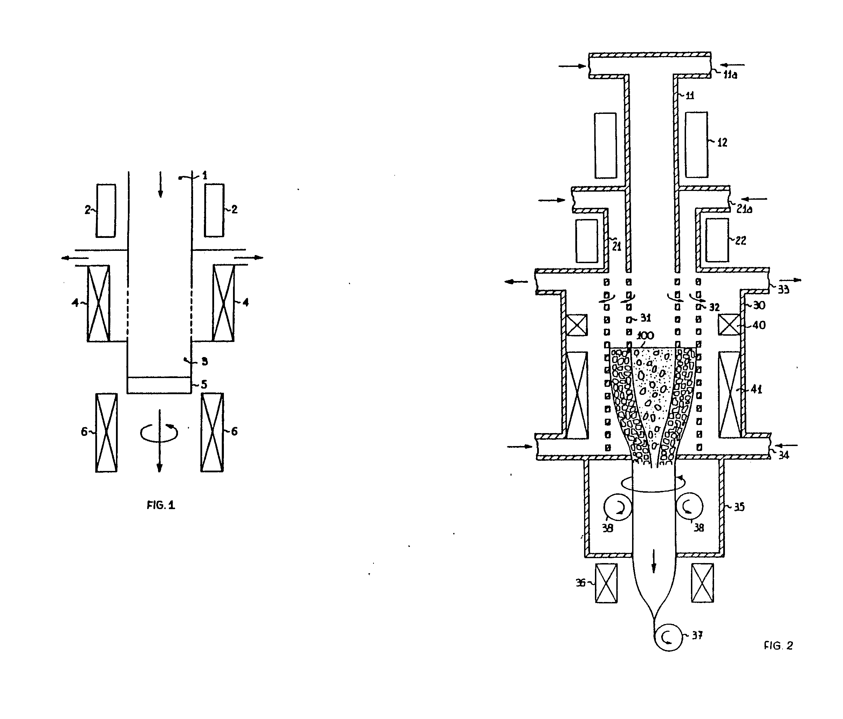

In Fig. 1, the reactants in vapour state are introduced into a chamber 1 at ambient temperature. Said reactants are a mixture of organo-metallic compounds of the elements forming the glass to be used in the fibre and the halogen ($Cl_2$ or $F_2$) or a radical-decomposable compound containing the halogen. In correspondence with the end portion of chamber 1 there is arranged UV activating system 2 composed of a UV lamp and of the optical system necessary to concentrate the radiations into the reaction zone. Chamber 1 is followed by a second chamber 3, which is associated with heating means 4 maintaining within chamber 3 a temperature lower than that of the vitreous transition of the porous body, and is made so as to allow exhausting of volatile products (in particular the alkyl halide).

Solid metal halides are collected on a base plate 5, shutting at the bottom chamber 3, and cause on such a plate an axial growth of the vitrifiable porous body.

Plate 5 and the porous body are axially displaced and rotated through a furnace 6 at a temperature allowing consolidation and vitrification; here also a treatment with helium and the halogen used for the reaction is carried out, so as to further purify the porous body by eliminating e.g. impurities due to reaction products incompletely volatilized in the preceding phase.

Finally, drawing occurs, preceded by preform annealing.

Axial growth of the porous body allows continuous fibre production: owing to the very low attenuation of the fibres produced ($10^{+3}$ to $10^{-4}$ dB/Km) very long distances could be covered by such fibres without signal regeneration. This continuous production is then necessary to obtain fibre trunks with a length corresponding to such distances, thus eliminating junctions, which introduce each the same attenuation as tens or hundreds of Kms of fibre.

The actual apparatus is shown in Fig. 2, for the fabrication of a fibre comprising as usual a core and a cladding with different refractive-index. The Figure shows the drawing already in progress, and hence plate 5 is no longer present.

In this Figure, references 11, 21 denote two coaxial reaction chambers, respectively for the formation of the vitreous structure with higher refractive index which is to form the core, and of the one with lower refractive index which is to form the cladding. References 12, 22 denote the UV activation system corresponding to block 2 of Fig. 1.

Chambers 11, 21, communicate at the bottom with a deposition and vitrification chamber 30, where the supporting plate is placed. Chamber 30 presents porous partitions 31, 32 which allow the exhaust of volatile reaction products towards sucking ducts 33 and at the same time define a fixed path for the materials which are being deposited, by leading the core materials towards the central part of the supporting plate 5 (Figure 1) and those of the cladding towards the plate periphery.

The upper part of chambere 30 is at constant and rather high temperature, even if inferior to vitrification temperature, such as to promote exhaust of volatile products and start the deposition. This zone is created by heating means 40.

Under this zone, heating means 41 define a zone where the temperature gradually varies from the value starting the deposition at a lower value so as to satisfy a thermoplastic deposition process, and then up to the values necessary for consolidation and formation of a vitreous structure.

Purification with He and the halogen introduced through a duct 34 takes place during the consolidation phase.

A thermostatically controlled chamber 35 for annealing of the vitreous structure, drawing furnace 36 and fibre winding drum 37, are located downstream chamber 30.

Rollers 38 schematize the means causing axial translation of the preform obtained from the porous body 100 while the preform is being formed; the means causing rotation are not shown; on the other hand they are quite conventional.

We will now describe by way of example the manufacturing steps of $PbF_2$—$AlF_3$ glass in which $AlF_3$ is present in a molar percentage from 30% to 60%. Starting organo-metallic compounds are $Pb(CH_3)_4$ and $Al(CH_3)_3$ which are made to react with $F_2$ in presence of UV radiation. Starting-compound percentages are selected so as to give the desired molar percentages of $AlF_3$ and $PbF_2$, taking into account the reaction efficiency.

Before deposition there is a zone at about 200°C where exhaust of volatile products is promoted.

Fluorides are deposited on the plate according to a thermophoretic process started by the passage of the solid particles through a zone where the temperature passes from ~200°C to ~100°C (in correspondence with the plate).

Then there is a temperature increase up to ~1000°C, for melting of the deposited materials, followed by a quick cooling to temperatures lower than 0°C. The preform is then passed through an annealing zone at a temperature near the vitreous transition temperature (~300°C) so as to improve mechanical properties of the vitreous structure. Then the drawing step is carried out.

It is clear that what is described has been given only by way of non limiting example. Variations and modifications are possible without going beyond the scope of the claims.

## Claims

1. Process of manufacturing optical fibres for operation in the medium infrared transmission range, wherein a preform is drawn which is made out of metal halide glasses obtained by vapour phase reaction between an organo-metallic compound of the element whose halide is to be obtained and a gaseous reactant containing the halogen, wherein the reaction is started at ambient temperature by ultraviolet radiation, and the halides produced undergo a thermal treatment so as to meet thermophoretic deposition conditions in order that a porous body (100) is formed and to obtain the subsequent consolidation and vitrification of the porous body in order to form the preform, and the annealing of the preform.

2. Process according to claim 1, wherein both the reaction producing the fibre core materials and that which produces the fibre cladding materials are started by UV radiation.

3. Process according to claim 1 or 2, wherein for the thermal treatment the halides produced are brought to a first temperature, which is relatively high but lower than the consolidation and vitrification temperature, to promote exhaust of the volatile products and to start the deposition; afterwards the halides are passed into a zone where the temperature first progressively decreases so as to meet thermophoretic deposition conditions, then, after deposition has taken place, increases up to the melting point for consolidation and vitrification and then sharply decreases; and finally the material is passed into another zone with constant temperature equal to the vitreous transition temperature for the annealing.

4. Process according to claim 3, wherein during the fabrication of the vitreous structure the deposited material is treated with an inert gas and a halogen to eliminate impurities.

5. Apparatus for manufacturing optical fibres for operation in the medium infrared transmission range, comprising means (36, 38) for drawing a preform obtained from a porous body (100) composed of metal halide glasses obtained by vapour-phase reaction between an organo-metallic compound of the element whose halide is to be obtained and a gaseous reactant containing the halogen, which apparatus comprises, upstream the drawing means (36, 38):

a reaction chamber (1; 11, 21) at ambient temperature, into which vapour-phase reactants are introduced, and which is associated with a system (2; 12, 22) for generating UV radiations and concentrating same in the reaction chamber;

a deposition and vitrification chamber (3; 6, 30) associated with means (4; 40, 41) for subjecting the halide produced by the reaction to the thermal treatments necessary to start and carry out the axial deposition and the consolidation and vitrification of the deposited material;

a chamber (35) for annealing the preform resulting from vitrification, whereby the means (40, 41) for thermal treatment define inside said deposition and vitrification chamber (30) two axially subsequent zones, the first being at high and constant temperature, even though lower than vitrification temperature, while in the second zone the temperature first gradually decreases to meet thermophoretic deposition conditions, hence it increases again up to the values corresponding to the melting point of the glass concerned and finally presents a sharp decrease down to values which can be lower than 0°C.

6. Apparatus according to claim 5, said reaction chamber comprising two coaxial rooms (11, 21) for the reactions intended to produce fibre-core and cladding material, each room being equipped with its own system (12, 22) for starting the reaction by UV radiation, and said deposition and vitrification chamber (30) comprising two coaxial rooms separated by porous partitions (31, 32) defining two fixed paths for core and cladding material deposition and letting reaction volatile products pass to a sucking conduit (33).

7. Apparatus according to claim 5 or 6, whereby in correspondence with said second zone the deposition chamber comprises a conduit (34) for introducing inert gas and halogen to eliminate impurities in the deposited material.

## Patentansprüche

1. Verfahren zum Herstellun von optischen Fasern zum Arbeiten im Übertragungsbereich des mittleren Infrarot, bei dem man eine Vorform zieht, die aus Metallhalogenidgläsern hergestellt ist, welche durch Dampfphazenreaktion zwischen einer organometallischen Verbindung des Elements, dessen Halogenid erzeugt werden soll, und einem das Halogen enthaltenen gasförmigen Reaktionsstoff hergestellt sind, wobei man die Reaktion bei Umgebungstemperatur durch ultraviolette Strahlung startet und die erzeugten Halogenide einer Wärmebehandlung zur Erzeilung der thermophoretischen Ablagerungsbedingungen, um einen porösen Körper (100) zu bilden, zur Herstellung der Vorform die nachfolgende Konsolidierung und Vitrifizierung des porösen Körpers zu erhalten, und zum Glühen der Vorform unterwirft.

2. Verfahren nach Anspruch 1, bei dem man sowohl die Reaktion, die die Faserkernmaterialien ergibt, als auch die Reaktion, die die Faserüberzugsmaterialien ergibt, durch ultra-violette Strahlung startet.

3. Verfahren nach Anspruch 1 oder 2, bei dem man die erzeugten Halogenide für die Wärmebehandlung auf eine erste Temperatur bringt, die verhältnismäßig hoch, jedoch niedriger als die Konsolidierungs- und Vitrifizierungstemperatur ist, um das Entweichen der flüchtigen Produkte zu fördern und die Ablagerung in Gang zu setzen; man dann die Halogenide in einen Bereich befördert, in dem die Temperatur zuerst fortschreitend abnimmt, um so die thermophoretischen Ablagerungsbedingungen zu erfüllen, und man dann, nachdem die Ablagerung stattgefunden hat, die Temperatur zur Konsolidierung und Vitrifizierung bis zum Schmelzpunkt erhöht und sie die scharf erniedrigt; und man schließlich zum Glühen das Material in einen weiteren Bereich befördert, der eine konstante Temperatur gleich der vitrösen Übergangstemperatur aufweist.

4. Verfahren nach Anspruch 3, bei dem man während der Herstellung der vitrösen Struktur das abgelagerte Material mit einem inerten Gas und einem Halogen zur Beseitigung von Verunreinigungen behandelt.

5. Vorrichtung zur Herstellung optischer Fasern zum Arbeiten im Übertragungsbereich des mittleren Infrarot, mit einer Einrichtung (36, 38) zum Ziehen einer Vorform, die aus einer aus Metallhalogenidgläsern, die aus einer Dampfphasenreaktion zwischen einer organometallischen Verbindung des Elements, dessen Halogenid erzeugt werden soll, und einem das Halogen enthaltenden gasförmigen Reaktionsstoff stammen, aufgebauten porösen Matrix (100) hergestellt wird, wobei die Vorrichtung stromoberhalb der Einrichtung (36, 38) zum Ziehen folgende Teile umfaßt:

eine Reaktionskammer (1; 11, 21) bei Umgebungstemperatur, in die in der Dampfphase befindliche Reaktionstoffe eingeführt werden und die mit einem System (2; 12, 22) zum Erzeugen von ultra-violetten Strahlungen und zu deren Konzentration in der Reaktionskammer verbunden ist;

eine Ablagerungs- und Vitrifizierungskammer (3; 6, 30), die mit Einrichtungen (4; 40, 41) verbunden ist, durch die die durch die Reaktion erzeugten Halogenide den thermischen Behandlungen unterworfen werden, welche zum Starten und Durchführen der axialen Ablagerung und der Konsolidierung und Vitrifizierung des abgelagerten Materials notwendig sind;

eine Kammer (35) zum Glühen der aus der Vitrifizierung resultierenden Vorform, wobei die Einrichtung (40, 41) zur Wärmebehandlung innerhalb der Ablagerungs- und Vitrifizierungskammer (30) zwei axial aufeinander folgende Zonen begrenzt, von denen sich die erste auf hoher und konstanter Temperatur, die jedoch niedriger ist als die Vitrifizierungstempeatur, befindet, während in der zweiten Zone die Temperatur zuerst fortschreitend absinkt, um auf Bedingungen der thermophoretischen Niederschlagung zu erfüllen, und dann wieder bis zu den Werten ansteigt, die dem Schmelzpunkt des betroffenen Glases entsprechen, und schließlich einen scharfen Abfall bis hinunter zu Werten, die niedriger als 0°C sein können, aufweist.

6. Vorrichtung nach Anspruch 5, bei der die Reaktionskammer zwei coaxiale Räume (11, 21) für die zur Herstellung des Faserkernmaterials und des Überzugsmaterials beabsichtigten Reaktionen aufweist, von denen jeder Raum mit seinem eigenen System (12, 22) zum Starten der Reaktion durch ultra-violette Strahlung ausgestattet ist, und die Ablagerungs- und Vitrifizierungskammer (30) zwei coaxiale Räume umfaßt, die durch poröse Unterteilungen (31, 32) getrennt sind, welche zwei feste Pfade für die Niederschlagung des Kernmaterials und die Niederschlagung des Überzugsmaterials begrenzen und flüchtige Reaktionsprodukte zu einer Saugleitung (33) abziehen lassen.

7. Vorrichtung nach Anspruch 5 oder 6, bei der in Übereinstimmung mit der zweiten Zone die Ablagerungskammer eine Leitung (34) zum Einleiten von inertem Gas und Halogen zur Beseitigungen von Verunreinigungen im niedergeschlagenen Material aufweist.

**Revendications**

1. Procédé pour la fabrication de fibres optiques pour opérer dans la bande de transmission infrarouge moyenne, où l'on étire une préforme composée de verres à base d'halogénures métalliques obtenus par la réaction en phase vapeur d'un composé organométallique de l'élément dont on veut obtenir l'halogénure et d'un réactant gazeux qui contient l'halogène, où la réaction est déclenchée à température ambiente à l'aide d'un rayonnement ultraviolet, et les halogénures produits sont soumis à un traitement thermique de manière à satisfaire les conditions de dépôt par thermophorèse pour former un corps poreux (100) et obtenir ensuite la consolidation et la vitrification du corps poreux pour obtenir la préforme, et le recuit de la préforme.

2. Procédé suivant la revendication 1, où tant la réaction donnant naissance aux matériaux de coeur que celle donnant naissance aux matériaux de la gaine sont déclenchées à l'aide de rayonnement UV.

3. Procédé suivant la revendication 1 ou 2, où, pour le traitement thermique, les halogénures produits sont portés à une première température qui est relativement élevée, mais plus basse que la température de consolidation et vitrification, pour aider l'expulsion des produits volatils et commencer le dépôt; après on fait passer les halogénures dans une zone où la température d'abord décroît progressivement, de manière à satisfaire les conditions de dépôt par thermophorèse, puis, après que le dépôt a eu lieu, augmente jusqu'au point de fusion pour la consolidation et la vitrification, et après décroît rapidement; et enfin le matériau est fait passer dans une autre zone à température constante, égale à la température de transition vitreuse, pour le recuit.

4. Procédé suivant la revendication 3, où, pendant la fabrication de la structure vitreuse, le matériau déposé est traité par un gaz inerte et un halogène pour éliminer les impuretés.

5. Appareillage pour la fabrication de fibres optiques pour opérer dans la bande de transmission infrarouge moyenne, qui comprend des moyens (36, 38) pour l'étirage d'une préforme obtenue à partir d'une matrice poreuse (100) composée de verres à base d'halogénures métalliques obtenus par la réaction en phase vapeur d'un composé organométallique de l'élément dont on désire obtenir l'halogénure et un réactif gazeux qui contient l'halogène, l'appareillage comprenant, en amont des moyens d'étirage (36; 38):

une chambre de réaction (1; 11, 21) à température ambiante, où l'on introduit les réactifs en phase vapeur et qui est associée à un système (2; 12, 22) pour engendrer des radiations ultraviolettes et les concentrer dans la chambre de réaction;

une chambre de dépôt et vitrification (3; 6, 30) associée à des moyens (4; 40, 41) pour soumettre l'halogénure produit par la réaction aux traitements thermiques nécessaires à déclencher et à effectuer le dépôt axial et la consolidation et vitrification du matériau déposé;

une chambre (35) de recuit de la préforme qui résulte de la vitrification, les moyens de traitement thermique (40, 41) définissant dans la chambre de dépôt et vitrification (30) deux zones axialement successives, dont la première est à température constante et élevée, mais plus basse que la température de vitrification, tandis que dans la deuxième zone la température décroît d'abord par étapes pour satisfaire les conditions de déposition par thermophorèse, puis augmente à nouveau jusqu'aux valeurs correspondant au point de fusion du verre concerné, et enfin décroît rapidement jusqu'à des valeurs qui peuvent être inférieures à 0°C.

6. Appareillage suivant la revendication 5, où ladite chambre de réaction comprend deux zones coaxiales (11, 21) pour les réactions destinées à produire les matériaux pour le coeur et la gaine de la fibre, chaque chambre étant pourvue de son propre système (12, 22) pour déclencher la réaction à l'aide de rayonnement UV, et ladite chambre de dépôt et vitrification (30) comprend deux zones coaxialles séparées par des cloisons poreuses (31, 32) qui définissent deux parcours fixes pour le dépôt des matériaux du coeur et de la gaine de la fibre et laissent confluer les produits volatils de la réaction dans un conduit d'aspiration (33).

7. Appareillage suivant les revendications 5 ou 6, où la chambre de dépôt comprend, en correspondance avec ladite seconde zone, un conduit (34) pour l'introduction d'un gaz inerte et d'halogène pour éliminer les impurétés du matériau déposé.

FIG. 2

FIG. 1